# EUROPÄISCHE PATENTSCHRIFT

(11) **EP 1 384 208 B1**
(45) Veröffentlichungstag und Bekanntmachung des Hinweises auf die Patenterteilung: **11.08.2010**
(21) Anmeldenummer: 02769123.7
(22) Anmeldetag: 13.04.2002
(51) Int. Cl.: G07C 9/00, H01H 13/06

(54) **GEHÄUSE FÜR EINEN ELEKTRONISCHEN SCHLÜSSEL**
HOUSING FOR AN ELECTRONIC KEY
BOITIER POUR UNE CLE ELECTRONIQUE

(30) Priorität: 28.04.2001 DE 10121045
(43) Veröffentlichungstag der Anmeldung: 28.01.2004
(73) Patentinhaber: Huf Hülsbeck & Fürst GmbH & Co. KG, 42551 Velbert (DE); AUDI AG, 85045 Ingolstadt (DE)
(72) Erfinder: GELDMACHER, Alexander, Reinhold, 42113 Wuppertal (DE); BÖHM, Günther, 85137 Walting (DE); KLOTZ, Thomas, 80935 München (DE)
(74) Vertreter: Ludewig, Karlheinrich
(86) Internationale Anmeldenummer: PCT/EP2002/004125
(87) Internationale Veröffentlichungsnummer: WO 2002/091309

(56) Entgegenhaltungen:
- WO-A-99/55990
- DE-A- 19 605 201
- DE-C- 19 964 166

## Beschreibung

Die Erfindung betrifft ein Gehäuse für einen elektronischen Schlüssel, insbesondere zur Verwendung bei Kraftfahrzeugen, mit im Gehäuseinneren vorgesehenen elektrischen und elektronischen Bauteilen, die wenigstens teilweise auf einer Platine angeordnet sind, mit einer Gehäuseöffnung die durch ein elastisches Tastenfeld mit wenigstens einer Taste abdeckbar ist. Hierbei ist die Taste an ihrer Platine zugewandten Seite mit einer Verlängerung versehen, durch die ein als Schaltelement ausgebildetes Bauteil auf der Platine betätigbar ist, wobei dem Tastenfeld zu Halterung an dem Gehäuse ein Träger zugeordnet ist.

Derartige Schlüssel werden in der heutigen Zeit immer mehr verwandt, um das Öffnen und Schließen eines Fahrzeuges und/oder des Kofferraumes leichter vornehmen zu können. Derartige Gehäuse haben jedoch den Nachteil, dass sie nicht bedienungsfreundlich sind, dass die Abdichtung durch die Bedienteile unzureichend ist oder der Aufwand für Fertigung und/oder Montage zu groß ist. Aus der WO 99/55990 A ist ein Gehäuse für Schlüssel bekannt geworden, bei dem dem Tastenfeld zu Halterung an dem Gehäuse ein Träger zugeordnet ist. Tastenfeld und Träger sind als Halbteile vorgefertigt, die mit dem Kunststoff des Gehäuses bei seiner Herstellung umspritzt sind.

Aufgabe der Erfindung ist es, dem Schlüsselgehäuse bei optimaler Dichtheit eine verbesserte Haptik und Optik zu geben, und zugleich noch eine einwandfreie Bedienung zu gewährleisten.

Diese Aufgabe wird erfindungsgemäß dadurch gelöst, daß das Tastenfeld den unterhalb des Tastenfeldes liegenden Träger mit einem umlaufenden Rand untergreift, daß der elastische Rand sich auf einer Schulter des Gehäuses abstützt, hierbei wird der Rand durch Haltemittel dichtend auf der Gehäuseschulter komprimiert. Durch das elastische Tastenfeld dem unmittelbar ein Träger zugeordnet wird und das mit dem Träger auf dem Gehäuse abdichtend befestigt wird ist eine sichere und leicht montierbare Einheit gegeben, die optisch sehr gut wirkt und von der Haptik her sicher zu bedienen ist. Durch die Komprimierung des Randes des Tastenfeldes wird die Abdichtung wesentlich verbessert, so daß rundherum eine sichere Abdichtung gegeben ist. Verunreinigungen oder Flüssigkeiten können nicht in das Gehäuse gelangen, da das Tastenfeld mit dem Träger die Gehäuseöffnung vollständig verschließt. Empfehlenswert ist es hierbei, wenn die Schulter einstückiger Bestandteil des Gehäuses ist und die Schulter eine dem Rand des Tastenfeldes zugewandte einstückige mit der Schulter ausgebildete Dichtrippe trägt. Die Dichtrippe greift in den elastischen Rand ein, und erhöht im Zusammenspiel mit den Haltemitteln die Abdichtung.

Vorteilhafterweise durchgreift die an der Innenseite des Tastenfeldes unterhalb der Taste vorgesehene Verlängerung als Stößel eine Öffnung des Trägers. Zum einen erhält man hierdurch eine sichere Ausrichtung des Tastenfeldes zu der darunter liegenden Platine und somit zu den Schaltelementen, zum anderen kann der Stößel direkt an das Schaltelement angreifen und die Elektronik auf der Platine aktivieren. Vorteilhafterweise hintergreifen die Haltemittel mit Vorsprüngen Bereiche des Gehäuses um so sicher Träger und Tastenfeld am Gehäuse halten zu können. Hierbei empfiehlt es sich die Haltemittel als federnde Rasten mit Rastnasen auszubilden, die entlang des Trägers angeordnet sind, um so eine gleichmäßige Belastung des Trägers bei der Befestigung zu erhalten. Besonders vorteilhaft ist es, wenn die Haltemittel beim Einsetzen der Baueinheit bestehend aus Träger und Tastenfeld zunächst zurückfedern und nach erfolgter Komprimierung des Tastenfeldrandes in ihrer Haltestellung federn. Dadurch, daß der Rand erst komprimiert wird und dann die Haltemittel erst wirken, ist sichergestellt, daß immer eine sichere Befestigung des Tastenfeldes vorliegt. Falls die Rastvorsprünge nicht zurückfedern können, bleibt das Tastenfeld optisch erkennbar lose auf dem Gehäuse liegen, so daß erneut die Befestigung vorgenommen werden muss. Günstigerweise ist der umlaufende Rand des Tastenfeldes im Querschnitt u-förmig gestaltet, um so für den Träger eine sichere Aufnahme und Abdichtung zu gewährleisten. Hierbei empfiehlt es sich, daß der lichte Abstand der beiden Schenkel des u-förmigen Randes so groß ist, wie die Höhe eines umlaufenden zum Tastenfeld weisenden Steges des Trägers ist. Hierdurch belastet der Steg des Trägers rundum den Tastenfeldrand, so daß dieser leicht eingesetzt werden kann, und das Tastenfeld und Träger eine vormontierte Baueinheit bilden.

Bei einem besonderen Ausführungsbeispiel der Erfindung mit einem mehrere Tasten aufweisenden Tastenfeld ist zwischen zwei Tasten eine Verstärkung vorgesehen. Durch die Verstärkung lassen sich die einzelnen Tasten deutlich bei Einleitung ihrer Schaltbewegung unterscheiden. Vorteilhafterweise ist hierbei die Verstärkung als Materialverdickung ausgebildet, so daß die einzelnen Tasten selber membranartig ausgebildet sind, während der Rand um die einzelnen Teile als Materialverdickung gestaltet ist. Es empfiehlt sich die Materialverdickung leistenförmig auszubilden um so diese Leisten in nutenförmigen Ausnahmen des Trägers eingreifen zu lassen. Durch solch eine Maßnahme sind die einzelnen Tasten genau zu Schaltelementen der Platine ausgerichtet, trotzdem ist eine deutliche Abgrenzung der einzelnen Tasten gegeben.

Um optisch auch mehrere Tasten des Tastenfeldes anzudeuten, ist auf der Oberseite des Tastenträgers zwischen zwei Tasten eine Vertiefung vorgesehen, diese begrenzt deutlich die einzelnen Tasten des Tastenfeldes.

Beim besonderen Ausführungsbeispiel kann die Vertiefung nutenartig aufgebaut sein und zumindest bereichsweise eine Zierrippe tragen, die gleichzeitig die Funktion eines Fühlsteges (Haptikrippe) hat. Diese Maßnahme erlaubt bei der Schaltbewegung schon die einzelnen Tasten zu unterscheiden, da durch die Verstärkungsrippe auf der Oberseite ein deutlich fühlbare Erklärung in der Fläche gegeben ist. Um die Haptik noch besser zu gestalten, ist vorteilhafterweise die in die Vertiefung hineinschiebbare Verstärkungsrippe bereichsweise bis auf die Gehäuseoberseite hin verlängert. Diese Maßnahme erlaubt, sobald das Schlüsselgehäuse in der Hand genommen wird, deutlich eine Unterscheidung der einzelnen Schaltflächen. Durch alle die vorgenannten Maßnahmen wird die Dichtung des Tastenfeldes im Gehäuse nicht beeinträchtigt. Durch den Träger in Verbindung mit dem Tastenfeld ist eine sichere Abdichtung gegeben.

Um eine möglichst schnelle Montage und sichere Halterung zu erhalten, empfiehlt es sich, daß das Gehäuse einen rundumlaufenden Steg aufweist. Auf diesem Steg ruht die Platine, die dann in Verbindung mit den Schaltelementen und den Stößeln des Tastenfeldes auf dem rundumlaufenden Steg gehalten werden kann. Darüber hinaus ergibt sich unterhalb der Platine ein weiterer Aufnahmeraum, in dem beispielsweise die Stromversorgung oder weitere elektronische oder elektrische Bauteile angeordnet sind.

Bei einem besonderen Ausführungsbeispiel der Erfindung ist das Gehäuse zweischalig aufgebaut. Die Unterschale ist Träger der Platine und die Oberschale weist die durch das Tastenfeld abdeckbare Öffnung mit der Bedienungsfläche auf. Diese Anordnung ergibt wiederum eine sichere Halterung und einen sicheren Aufbau insbesondere hinsichtlich der Formgestaltung und Abdichtung, da an den abzudichtenden Stellen gradlinig verlaufende Kanten oder Flächen vorgesehen sind.

Auf der Zeichnung ist der Erfindungsgegenstand in einem Ausführungsbeispiel dargestellt und zwar zeigen:
- Fig. 1: in perspektivischer Darstellung das Schlüsselgehäuse mit Tastenfeld,
- Fig.2: in perspektivischer Darstellung einen Schnitt durch das Schlüsselgehäuse,
- Fig. 3: einem größeren Ausschnitt eines Teils nach Fig. 2.
- Fig. 4: die Unterseite des Oberteiles des Schlüsselgehäuses.
- Fig. 5: einen Längsschnitt durch das Schlüsselgehäuse.
- Fig. 6: in perspektivischer auseinandergezogener Darstellung die Oberseite des Oberteiles des Schlüsselgehäuses.
- Fig. 7: die Unterseite in perspektivischer auseinandergezogener Darstellung des Oberteiles des Gehäuses.

Das erfinderische Schlüsselgehäuse, 10 besteht aus einer Oberschale 11 sowie einer Unterschale 12.

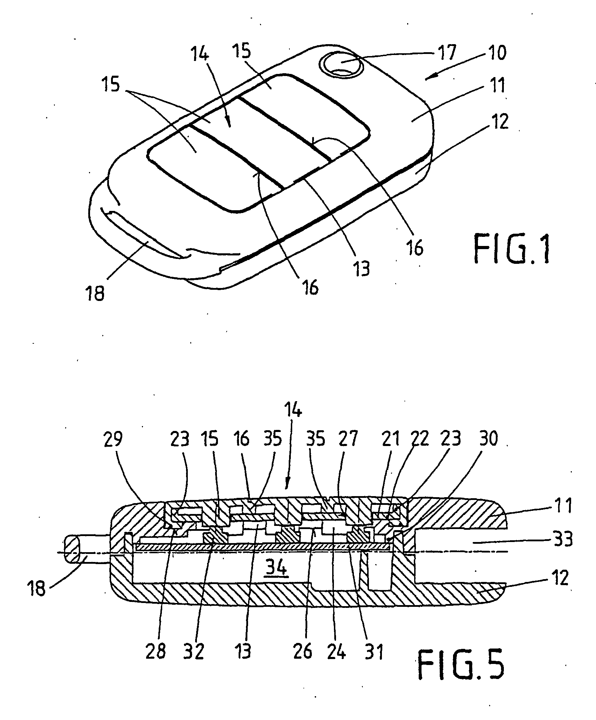

Die Oberschale 11 weist eine Ausnehmung 13 auf, in der ein Tastenfeld 14 mit einzelnen Tasten 15 eingesetzt ist. Die einzelnen Tasten 15 sind durch Vertiefungen 16 voneinander getrennt. Wie aus Fig. 1 noch weiter zu erkennen ist, weist das Gehäuse 10 einen Durchbruch 17 auf. Dieser Durchbruch dient zur Aufnahme eines Lagerzapfens des mechanischen Schlüssels des Schlüsselgehäuses. An der gegenüberliegenden Seite des Gehäuses ist eine Öse 18 vorgesehen, durch die das Schlüsselgehäuse beispielsweise an ein Schlüsselbund befestigbar ist.

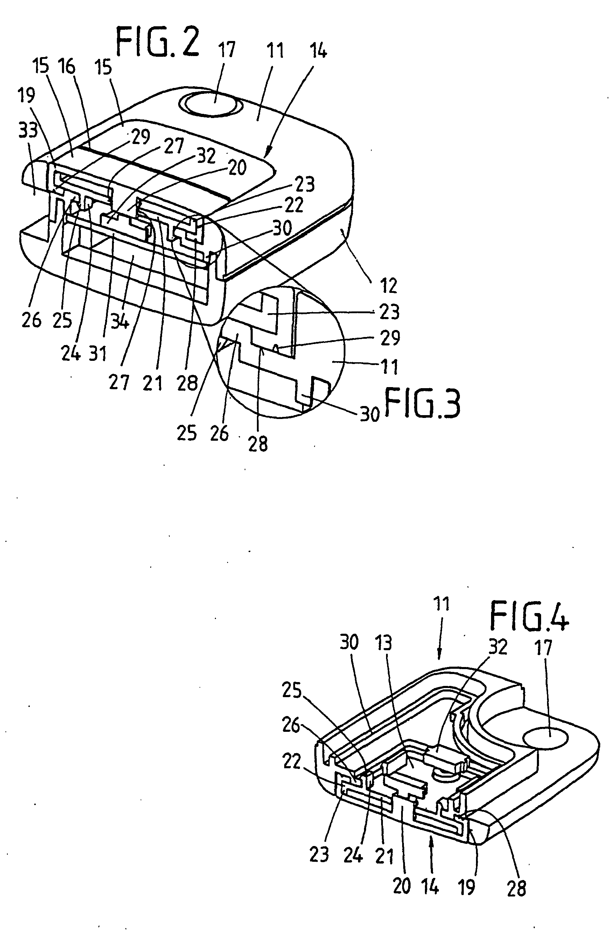

Wie aus Fig. 2 zu erkennen ist, weist das elastische Tastenfeld 14 einen u-förmigen Randbereich 19 auf. Hierbei stützt sich der freie Schenkel des Randbereiches auf eine Schulter 28 der Oberschale 11 des Gehäuses ab. Weiter ist noch zu erkennen, daß an der Innenseite des Tastenfeldes 14 ein Stößel 20 angeformt ist. Dieser Stößel dient bei Betätigung zur Aktivierung eines Schaltelementes 32, in dem die elastische Taste 15 mit dem Stößel 20 gegen das Schaltelement bewegt wird, der Stößel durchquert gleitend Öffnungen 29 in einem Träger 21.

Der u-förmige Rand 19 des Tastenfeldes nimmt rundumlaufend den Rand 22 eines Trägers 21 auf. Hierbei ist der Rand des Trägers mit einem Steg 23 vorgesehen, der etwa die gleiche Breite wie die u-förmige Aufnahme hat, so daß der Rand des Tastenfeldes 14 gegenüber dem übrigen Bereich verhärtet ist. Das Tastenfeld selber ist aus einem elastischen Material hergestellt und im Bereich der Tasten membranartig ausgebildet.

Wie zu erkennen ist trägt die Schulter 28 des Gehäuses eine Dichtrippe 29. Diese Dichtrippe drückt sich in den Rand 19 des Tastenfeldes ein, wenn bei der Befestigung der Rand zusammengedrückt wird, um sich federnd auf die Schulter zu legen.

Der Trägerrand 22 trägt an seiner Unterseite Rasten 24, die mit einer Rastnase 25 versehen sind, die zur Befestigung an einen Haltebereich 26 hintergreifen.

Bei der Befestigung wird die Baueinheit aus Träger und Tastenfeld soweit unter Komprimierung des Randes des Tastenfeldes gegen die Schulter 28 der Oberschale gedrückt, bis die Rasten 24 zurückfedern und dann schließlich mit ihren Rastnasen an den Haltebereich 26 zu liegen kommen.

Nachzutragen bleibt hier, daß das Schaltelement 32 auf einer Platine 31 vorgesehen ist. Diese stützt sich an der Unterschale ab und wird durch einen umlaufenden Vorsprung 30 an der Oberschale gegen die Unterschale gedrückt und gehalten. Der umlaufende Vorsprung 30 ist deutlich in Fig. 4 zu erkennen. Die Platine ist noch mit weiteren nicht näher erläuterten elektrischen oder elektronischen Bauelementen versehen.

Schließlich sei hier noch erwähnt, daß das Gehäuse 10 einen Aufnahmeraum 33 trägt. Dieser nimmt einen mechanischen Schlüssel auf, der mit einem Zapfen in dem Durchbruch 17 drehbar und gegebenenfalls herausklappbar ist.

Der unter der Platine liegende Raum 34 kann zur Ausnutzung von Unterbringung weiterer Bauteile oder der Batterie selber verwertet werden.

Aus Fig. 4 sind die Rasten mit den Rastvorsprüngen 24,25 deutlich zu erkennen, insbesondere wie sie an den Haltebereich 26 greifen. Die Stößel 20 greifen durch Öffnungen 27 und liegen im Bereich der Schaltelemente 32.

Bei dem vorliegenden Ausführungsbeispiel sind drei Tasten 15 vorgesehen. Also beispielsweise eine Taste zum Öffnen des Fahrzeuges, eine Taste zum Schließen und drittens eine Taste zur Öffnung beispielsweise des Kofferraumes eines Wagens. Wie aus Fig. 2 und Fig. 5 hervorgeht sind die beiden aneinander zugewandten Bereiche der Ober- und Unterschale labyrinthartig ausgebildet, so daß nach Einbringung gegebenenfalls einer Klebemasse oder einer Dichtung eine sichere Abdichtung gewährleistet ist. Bei dem Ausführungsbeispiel nach Fig. 5 ist zu erkennen, daß unter den Vertiefungen 16 leistenartige Verdickungen 35 vorgesehen sind. Diese stützen sich auf den Träger 21 ab, um so die membranartige Wirkung der einzelnen Tasten zu erhalten, dadurch, dass die Tastenmembrane 15 zwischen zwei Verdickungen 35 bzw. innerhalb des umlaufenden Steges des Trägers liegt.

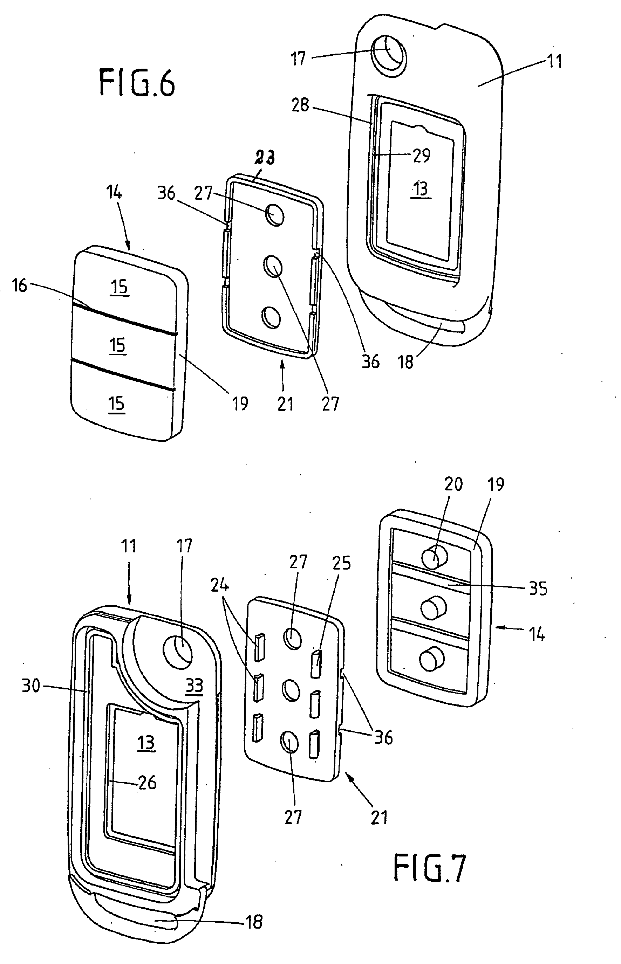

In Fig. 6 und 7 sind nun die einzelnen zu einer Baueinheit zusammengefaßten Teile der Oberschale zu erkennen. An der Unterseite des Tastenfeldes ist zu erkennen, daß der umlaufende Rand verdickt nämlich u-förmig gestaltet ist. Zwischen den einzelnen Tasten sind die leistenartigen Verdickungen vorgesehen während in der Mitte der Taste der Betätigungsstößel angeordnet ist. Die Verdickungen 35 sind so ausgebildet, daß sie in nutenförmige Aufnahmen 36 des Trägersteges 23 eingreifen und so schon bei der Montage das Tastenfeld zum Träger ausrichten. An der Unterseite des Trägers 21 sind die Rasten 24 mit den Rastvorsprüngen 25 angeordnet. Die Rasten sind zu den Längsseiten des rechteckigen Gehäusedurchbruches 13 angeordnet.

Die erwähnten drei Teile Tastenfeld, Träger und Oberschale sind als Baueinheit zusammenfassbar und montierbar. Der umlaufende u-förmige Rand des Tastenfeldes stützt sich auf der Gehäuseschulter ab. Beim Zusammenbau richten sich die leistenartigen Verdickungen sowie die Stößel zu den Öffnungen und den u-förmigen Aufnahmen aus, so kann dann diese Einheit gemeinsam in den Durchbruch eingesetzt werden, derart, daß die Rasten mit Ihren Rastnasen hinter Haltebereiche, vergleiche Fig. 2 und Fig. 4, eingreifen können.

Sobald diese Einheit zusammengebaut ist kann die Oberschale auf die Unterschale aufgesetzt werden, wobei dann der umlaufende Vorsprung 30 sich auf den oberen Rand der Platine abstützt.

Wie bereits erwähnt sind die dargestellten Ausführungsformen nur beispielsweise Verwirklichungen der Erfindung. Zur Trennung der einzelnen Tasten des Tastenfeldes können auch breitere Nuten verwendet werden, wobei dann in diese stabartige Verdickungen einschiebbar sind, die bereichsweise sogar am Außenrand der Oberschale anliegen, um so beim Betätigen den Beginn und das Ende der Taste fühlen zu können. Weiter sei hier noch erwähnt, daß der elektrische Aufbau insbesondere auch der Sender oder gegebenenfalls der Empfänger des Schlüssels nicht dargestellt sind.

### Bezugszeichenliste:

- 10: Gehäuse
- 11: Oberschale
- 12: Unterschale
- 13: Ausnehmung in 11
- 14: Tastenfeld
- 15: Taste
- 16: Vertiefungen
- 17: Durchbruch
- 18: Öse
- 19: u-förmiger Rand von 13
- 20: Stößel an 15
- 21: Träger
- 22: Trägerrand
- 23: Steg von 22
- 24: Raste
- 25: Rastnase von 24
- 26: Haltebereich für 24
- 27: Öffnung
- 28: Schulter an 11
- 29: Dichtrippe auf 28
- 30: umlaufender Vorsprung an der Unterseite von 11
- 31: Platine
- 32: Schaltelement
- 33: Aufnahmeraum für Schlüssel
- 34: Raum unter der Platine
- 35: Verdickung
- 36: u-förmige Aufnahmen an der Unterseite von 21

## Patentansprüche

1. Gehäuse für einen elektronischen und/oder mechanischen Schlüssel, insbesondere zur Verwendung bei Kraftfahrzeugen, mit im Gehäuseinneren vorgesehen elektrischen und elektronischen Bauteilen (32), die wenigstens teilweise auf einer Platine (31) angeordnet sind, mit einem Gehäusedurchbruch (13), der durch ein elastisches Tastenfeld (14) mit wenigstens einer Taste (15) abdeckbar ist, hierbei ist die Taste (15) an ihrer der Platine (31) zugewandten Seite mit einer Verlängerung versehen durch die ein als Schaltelement ausgebildetes Bauteil auf der Platine betätigbar ist, wobei dem Tastenfeld (14) zu Halterung an dem Gehäuse (10) ein Träger (21) zugeordnet ist,
**dadurch gekennzeichnet,**
**dass** das Tastenfeld (14) den unterhalb des Tastenfeldes liegenden Träger (21) mit einem umlaufenden Rand (19) umgreift, dass der elastische Rand (19) sich auf einer Schulter (28) des Gehäuses (10) abstützt, hierbei wird der Rand (19) durch Haltemittel (24, 25) dichtend auf der Gehäuseschulter (28) komprimiert.

2. Schlüsselgehäuse nach Anspruch 1, **dadurch gekennzeichnet, dass** die Schulter (28) einstückiger Bestandteil des Gehäuses ist und dass die Schulter (28) eine einstückige mit der Schulter ausgebildete, den Rand des Tastenfeldes (14) zugewandte Dichtrippe (29) trägt.

3. Schlüsselgehäuse nach Anspruch 1 oder 2, **dadurch gekennzeichnet, dass** die an der Innenseite des Tastenfeldes (14) unterhalb der Taste (15) vorgesehene Verlängerung als Stößel (20) eine Öffnung (27) des Trägers (21) durchgreift.

4. Schlüsselgehäuse nach einem der Ansprüche 1 bis 3, **dadurch gekennzeichnet, daß** die Haltemittel mit Vorsprüngen (25) Bereiche (26) des Gehäuses (10) hintergreifen.

5. Schlüsselgehäuse nach einem der Ansprüche 1 bis 4, **dadurch gekennzeichnet, daß** die Haltemittel als federnde Rasten (24) mit Rastnasen (25) ausgebildet sind.

6. Schlüsselgehäuse nach einem der Ansprüche 1 bis 5, **dadurch gekennzeichnet, daß** die Haltemittel (24,25) beim Einsetzen der Baueinheit bestehend aus Tastenfeld (14) und Träger (21) zunächst zurückfedern und nach erfolgten Zusammendrücken des Tastenfeldrandes (19) hinter den Haltebereich (26) federn.

7. Schlüsselgehäuse nach einem der Ansprüche 1 bis 6, **dadurch gekennzeichnet, daß** der umlaufende elastische Rand (19) des Tastenfeldes (14) im Querschnitt u-förmig gestaltet ist.

8. Schlüsselgehäuse nach einem der Ansprüche 1 bis 7, **dadurch gekennzeichnet, daß** der lichte Abstand der beiden Schenkel des u-förmigen Randes (19) des Tastenfeldes (14) so groß ist, wie die Höhe eines umlaufenden zum Tastenfeld (14) weisenden Steges (23) des Trägers (21) ist.

9. Schlüsselgehäuse nach einem der Ansprüche 1 bis 8, **dadurch gekennzeichnet, daß** bei einem mehrere Tasten (15) aufweisenden Tastenfeld (14) zwischen zwei Tasten (15) eine Verstärkung (35) vorgesehen ist.

10. Schlüsselgehäuse nach Anspruch 9, **dadurch gekennzeichnet, daß** die Verstärkung als Materialverdickung (35) ausgebildet ist.

11. Schlüsselgehäuse nach Anspruch 9 oder 10, **dadurch gekennzeichnet, daß** die Materialverdickung (35) leistenförmig ausgebildet ist und in nutförmige Aufnahmen (36) des Trägers (21) eingreift.

12. Schlüsselgehäuse nach einem der Ansprüche 1 bis 11, **dadurch gekennzeichnet, daß** zwischen zwei Tasten (15) auf der Oberseite des Tastenfeldes (14) eine Vertiefung (16) vorgesehen ist.

13. Schlüsselgehäuse nach Anspruch 12, **dadurch gekennzeichnet, daß** die Vertiefung (16) nutartig aufgebaut ist und zumindest bereichsweise eine Verstärkungsrippe trägt.

14. Schlüsselgehäuse nach Anspruch 13, **dadurch gekennzeichnet, daß** die in die Vertiefung einschiebbare Verstärkungsrippe bereichsweise bis auf die Gehäuseoberseite ragt.

15. Schlüsselgehäuse nach einem der Ansprüche 1 bis 14, **dadurch gekennzeichnet, daß** die Platine durch einen rundumlaufenden Vorsprung (30) einer Oberschale (11) auf eine Unterschale (12) gedrückt wird.

16. Schlüsselgehäuse nach einem der Ansprüche 1 bis 15, **dadurch gekennzeichnet, daß** das Gehäuse zweischalig aufgebaut ist, mit einer Unterschale (12) zur Aufnahme der Platine (31) und mit einer Oberschale (11), die den Durchbruch (13) trägt, der durch das Tastenfeld (14) abdeckbar ist.

17. Schlüsselgehäuse nach einem der Ansprüche 1 bis 16, **dadurch gekennzeichnet, daß** im Querschnitt die von den zur Halterung des Tastenfeldes dienenden Rasten (24) hintergriffenen Bereiche (26) des Gehäuses (10) im Abstand von der den Rand (19) tragenden Schulter (28) angeordnet sind.

## Claims

1. Housing for an electronic and/or mechanical key, in particular for use in motor vehicles, containing in the housing electrical and electronic components (32) which at least partially are arranged on a circuit board (31), with a housing breakthrough (13) coverable by an elastic keypad (14) with at least one key (15) whereby the key (15), on the side facing the board (31), is provided with an extension through which a component designed as a switching element on the board is operable, whereby dedicated to the keypad (14) for attachment to the housing (10) is a bearing (21),
thereby **characterized,**
**in that** the keypad (14) extends around the bearer (21) lying under the keypad with a circumferential rim (19), that the elastic rim (19) props against a shoulder (28) of the housing (10) whereby the rim (19) contracts by means of holders (24, 25) sealing-wise on the housing shoulder (28).

2. Key housing pursuant to Claim 1, **characterized in that** the shoulder (28) is a single-piece component of the housing and that the shoulder (28) carries a single-pieced sealing rib (29) which is designed with the shoulder and faces the rim of the keypad (14).

3. Key housing pursuant to Claim 1 or 2, **characterized in that** the extension provided at the inner side of the keypad (14) beneath the key (15) reaches as a tappet (20) through an opening (27) of the bearer (21).

4. Key housing pursuant to one of the claims 1 to 3, **characterized in that** the holders with protrusions (25) grip behind areas (26) of the housing (10).

5. Key housing pursuant to one of the claims 1 to 4, **characterized in that** the holders are designed as springy stops (24) with snap tabs (25).

6. Key housing pursuant to one of the claims 1 to 5, **characterized in that** the holders (24, 25), upon insertion of the structural unit comprising keypad (14) and bearer (21), initially spring back, and subsequent to pressing the keypad rim (19) into place, spring to behind the holding area (26).

7. Key housing pursuant to one of the claims 1 to 6, **characterized in that** the circumferential elastic rim (19) of the keypad (14) has a u-formed design in cross-section.

8. Key housing pursuant to one of the claims 1 to 7, **characterized in that** the clearance of both shoulders of the u-formed rim (19) of the keypad (14) is as high as the height of a cell connector (23)-of the bearer (21)-which is circumference-wise to the keypad (14).

9. Key housing pursuant to one of the claims 1 to 8, **characterized in that** for a keypad (14) exhibiting several keys (15), a reinforcement (35) is provided between two keys (15).

10. Key housing pursuant to Claim 9, **characterized in that** the reinforcement is designed as a thickening of material (35).

11. Key housing pursuant to Claim 9 or 10, **characterized in that** the thickening of material (35) is designed as a strip and grips into groove-like acceptors (36) of the bearer (21).

12. Key housing pursuant to claims 1 to 11, **characterized in that** provided between two keys (15) on the surface of the keypad (14) is an indentation (16).

13. Key housing pursuant to Claim 12, **characterized in that** the indentation (16) is groove-like in design and at least area-wise exhibits a reinforcement rib.

14. Key housing pursuant to Claim 13, **characterized in that** the reinforcement rib which can be inserted into the indentation protrudes area-wise up to the top side of the housing.

15. Key housing pursuant to one of the claims 1 to 14, **characterized in that** the board, by means of a circumferential projection (30) of an upper shell (11), is pressed onto a lower shell (12).

16. Key housing pursuant to one of the claims 1 to 15, **characterized in that** the housing is designed as a double shell, with a lower shell (12) for accepting the board (31), and with an upper shell (11) which carries the breakthrough (13) which is coverable by the keypad (14).

17. Key housing pursuant to one of the claims 1 to 16, **characterized in that**, in cross-section, the stops (24) serving to hold the keypad in place grip behind areas (26) of the housing (10) at the distance that the shoulders (28) which bear the rim (19) are arranged.

## Revendications

1. Boîtier de clé électronique et/ou mécanique, en particulier destiné à servir sur des véhicules à moteur, avec des composants (32) électriques et électroniques prévus à l'intérieur du boîtier, composants qui sont au moins en partie disposés sur une carte (31), avec dans le boîtier un orifice de passage (13) pouvant être recouvert par un champ (14) élastique comportant au moins une touche (15), cette touche (15) étant munie d'un prolongement sur son côté (31) regardant la carte, prolongement grâce auquel il est possible d'actionner sur la carte un composant configuré en élément de commutation, sachant qu'un support (21) est affecté au champ (14) de touches à titre de fixation contre le boîtier (10),
**caractérisé en ce que**
le champ (14) de touches ceinture d'un bord périphérique (19) le support (21) situé en dessous du champ de touches, **en ce que** le bord élastique (19) s'appuie sur l'épaulement (28) du boîtier (10), faisant que des moyens de retenue (24, 25) compriment le bord (19), tout en l'étanchant, contre l'épaulement (28) du boîtier.

2. Boîtier de clé selon la revendication 1, **caractérisé en ce que** l'épaulement (28) fait partie intégrante monobloc du boîtier et que cet épaulement (28) supporte une nervure d'étanchéité (29) monobloc solidaire de l'épaulement et tournée vers le bord du champ (14) de touches.

3. Boîtier de clé selon la revendication 1 ou 2, **caractérisé en ce que** le prolongement prévu sur le côté intérieur du champ (14) de touches en dessous de la touche (15)
traverse en tant que poussoir (20) un orifice (27) ménagé dans le support (21).

4. Boîtier de clé selon l'une des revendications 1 à 3, **caractérisé en ce que** les moyens de retenue passent au moyen de saillies (25) derrière des zones (26) du boîtier (10).

5. Boîtier de clé selon l'une des revendications 1 à 4, **caractérisé en ce que** les moyens de retenue sont configurés sous forme de crans (24) amortisseurs à saillies de crantage (25).

6. Boîtier de clé selon l'une des revendications 1 à 5, **caractérisé en ce que** les moyens de retenue (24, 25) commencent par reculer élastiquement lorsqu'on introduit l'unité constructive comprenant le champ (14) de touches et le support (21) puis, une fois que le bord (19) du champ de touches a été comprimé, reviennent élastiquement derrière la zone de retenue (26).

7. Boîtier de clé selon l'une des revendications 1 à 6, **caractérisé en ce que** la section du bord (19) élastique périmétrique du champ (14) de touches est configurée en forme de U.

8. Boîtier de clé selon l'une des revendications 1 à 7, **caractérisé en ce que** l'écart libre entre les deux branches du bord (19) en forme de U du champ (14) de touches est identique à la hauteur d'une nervure (23) périmétrique équipant le support (21) et regardant le champ (14) de touches.

9. Boîtier de clé selon l'une des revendications 1 à 8, **caractérisé en ce qu'**en présence d'un champ (14) comportant plusieurs touches (15), un renfort (35) a été prévu entre deux touches (15).

10. Boîtier de clé selon la revendication 9, **caractérisé en ce que** le renfort consiste en un épaississement (35) du matériau.

11. Boîtier de clé selon la revendication 9 ou 10, **caractérisé en ce que** l'épaississement (35) du matériau est configuré en bandeau et qu'il pénètre dans des gorges réceptacles (36) du support (21).

12. Boîtier de clé selon l'une des revendications 1 à 11, **caractérisé en ce que** sur le dessus du champ (14) de touches un creux (16) a été prévu entre deux touches (15).

13. Boîtier de clé selon la revendication 12, **caractérisé en ce que** le creux (16) est configuré en gorge et qu'il comporte au moins localement une nervure renfort.

14. Boîtier de clé selon la revendication 13, **caractérisé en ce que** la nervure renfort insérable dans le creux fait localement saillie jusqu'à hauteur du dessus du boîtier.

15. Boîtier de clé selon l'une des revendications 1 à 14, **caractérisé en ce que** la carte est maintenue appuyée sur une coque inférieure (12) par la saillie (30) périphérique d'une coque supérieure (11).

16. Boîtier de clé selon l'une des revendications 1 à 15, **caractérisé en ce que** le boîtier est constitué de deux coques, avec une coque inférieure (12) recevant la carte (31) et avec une coque supérieure (11) comportant l'orifice de passage (13) que le champ (14) de touches peut recouvrir.

17. Boîtier de clé selon l'une des revendications 1 à 16, **caractérisé en ce qu'**observées en coupe, les zones (26) du boîtier (10) - derrière lesquelles pénètrent les crans (24) servant à retenir le champ de touches - sont agencées distantes de l'épaulement (28) supportant le bord (19).
